# EUROPEAN PATENT APPLICATION

(11) **EP 0 598 676 A1**
(43) Date of publication of application: **25.05.1994**
(21) Application number: 93630091.2
(22) Date of filing: 18.11.1993
(51) Int. Cl.: A01G 25/02

(54) **Drip irrigation emitter and water tap useful therein**

(30) Priority: 19.11.1992 IL 10380692; 03.08.1993 IL 10657293
(71) Applicant: PASKAL AVIZAREY KSHIRA Ltd., Migdal Tefen 24959 (IL)
(72) Inventor: Shay, Ofer, 24 960 Kfar Vradim (IL); Ben-Dror, Michael, 13 855 M.P. Merom Hagalil (IL)
(74) Representative: Schmitz, Jean-Marie

(57) **Abstract**

A drip irrigation emitter includes a tube (20) having water discharge openings (21) through a wall, a flow-reducer element (22) bonded to the inner face of the tube for each discharge opening and having an outlet passageway (25) aligned with the respective discharge opening, and a tap (3) attached to the tube and including a hollow stem (31) at one end passing through the discharge opening in the tube in communication with the outlet passageway of the flow-reducer element, and a nipple (32) at the opposite end for receiving a water feed tubelet (33). The tap includes a band (30) for enclosing the tube and integrally formed with the hollow stem and nipple.

## Description

The present invention relates to drip irrigation emitters, and also to water taps for use with such emitters.

Drip irrigation emitters have come into widespread use for supplying irrigation water at a continuous low rate directly to the root region of plants. One type of emitter, frequently called a linear-source emitter or integrated emitter, includes a continuous tube formed with a plurality of water discharge openings spaced along its length and integrated with a flow-reducer element bonded to the tube for each of its water discharge openings in order to reduce the flow of the water through the respective discharge opening. Such linear-source emitters are widely used for irrigating continuous rows of plants.

Another type of drip irrigation emitter, sometimes called a point-source emitter and widely used for irrigating individual plants such as trees, includes a housing which is plugged into a water supply pipe. The housing includes the flow-reducer element within it, a hollow stem at one end for insertion into an opening formed in a water supply pipe, and a nipple at the other end for receiving a water feed tubelet which feeds the water directly, e.g., to the plant to be irrigated or to a branch line.

It can be readily appreciated that point-source emitters of the foregoing type are considerably more expensive per water discharge opening than linear-source emitters.

According to the present invention, there is provided a drip irrigation emitter comprising: a tube for receiving pressurized water and having a water discharge opening through a wall thereof; a flow-reducer element bonded to the inner face of the tube and having an inlet passageway at one end of the flow-reducer element communicating with the interior of the tube, and an outlet passageway at the opposite end of the flow-reducer element aligned with the discharge opening; and a tap attached to the tube and including a hollow stem at one end passing through the discharge opening in the tube in communication with the outlet passageway of the flow-reducer element, and a connector nipple at the opposite end.

It will thus be seen that the invention enables the relatively inexpensive linear-source emitters to be used as point-source emitters by merely attaching a tap to the tube at each of its water discharge openings to be used for supplying water to a plant. The discharge openings not to be so used can be merely plugged in any suitable manner, for example by a construction similar to the tap but including a plug for plugging the discharge opening, rather than a hollow stem and nipple for receiving a water feed tubelet.

According to further features in the described preferred embodiments, the tap is attached to the tube by a tube clamp including a band enclosing and clamped to the tube, the tap being integrally formed with the band. The tip of the hollow stem is abuttable against the flow-reducer element to limit the inner position of the hollow stem. The tip is formed with a slot, preferably of rectangular configuration, extending axially of the hollow stem to provide a water flowpath from the outlet passageway of the flow-reducer element through the stem to the nipple.

The preferred embodiments of the invention described below are particularly useful with a linear-source emitter tube in which each of the passageway in the flow-reducer element is of annular configuration and extends around the inner circumference of the tube, and in which the tube includes a plurality of discharge openings around its circumference in alignment with the outlet passageway. When used with such an emitter tube, the band is preferably integrally formed with one of the taps for one of the discharge openings, and with a plug for each of the remaining discharge openings.

The invention also provides a tap constructed in accordance with the above features for attachment to a drip irrigation tube of the foregoing type.
Fig. 1 is an exploded view, partly broken away to show internal structure, illustrating one form of drip irrigation emitter in accordance with the present invention;
Fig. 2 illustrates the emitter of Fig. 1 in assembled condition;
Fig. 3 is a transverse sectional view through the emitter of Fig. 2;
Fig. 4 illustrates a drip irrigation emitter including a tube having a plurality of taps along its length;
and Figs. 5, 6 and 7 illustrate modifications in the construction of the tap of Figs. 1-4.

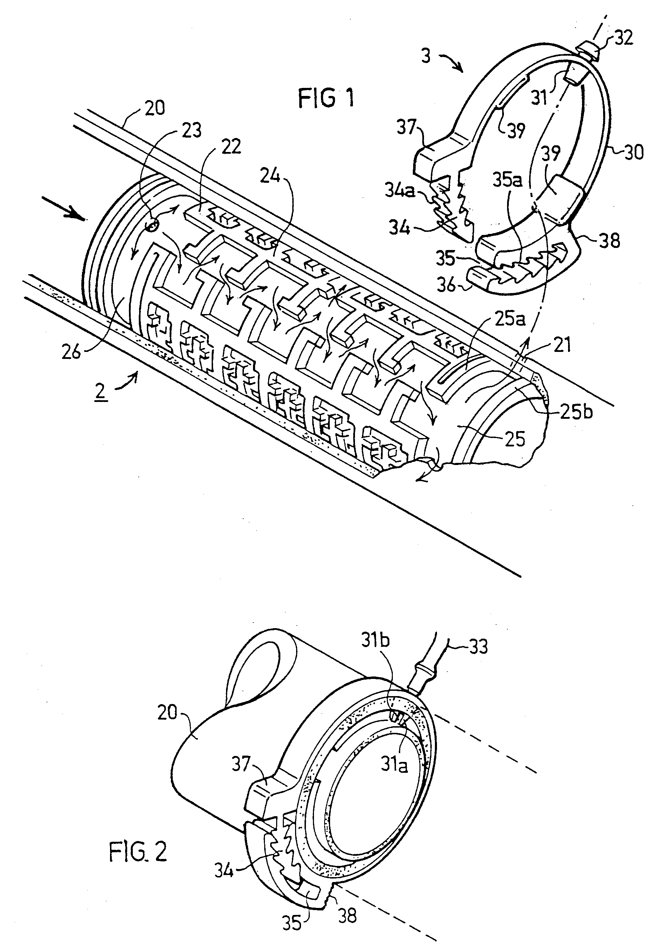

The drip irrigation emitter illustrated in Figs. 1-4 includes two basic elements: a dripper tube, or linear-source emitter, generally designated 2, formed with a plurality of water discharge openings along its length; and a tap, generally designated 3, attachable to the dripper tube 2 at each of its discharge openings to enable the dripper to be used as a plurality of point-source emitters for supplying water to individual plants.

The dripper tube 2 may be of any conventional construction. As shown, it includes a tube 20 for receiving pressurized water, and having a plurality of water discharge openings 21 through its wall at spaced locations along the length of the tube. A plurality of flow-reducer elements 22 are bonded to the inner face of the tube in spaced relation along its length, corresponding to the spacing of the water discharge openings 21. One such flow-reducer element 22 is shown in Fig. 1, wherein it will be seen that it includes an inlet passageway 23 at one end communicating with the interior of tube 20, a flow-reducer labyrinth 24, and an outlet passageway 25 at the opposite end in alignment with the respective discharge opening 21.

In the construction illustrated in Fig. 1, the flow-reducer element 22 is of cylindrical configuration and is bonded to the inner face of tube 20 around its complete inner circumference. There are a plurality of inlet openings 23 (only one of which is shown in Fig. 1) communicating with an annular inlet passageway 26 extending around the circumference of the flow-reducer element 22; the outlet passageway 25 is also of annular configuration, and it cooperates with a plurality (e.g., three) of water discharge openings 21 through the wall of the tube 20. The annular outlet passageway 25 is defined by two axially-spaced annular walls 25a, 25b straddling the opposite sides of the discharge openings 21.

This construction also includes a plurality (e.g., three) labyrinths 24 extending in parallel between the inlet annular passageway 26 and the outlet annular passageway 25. While Fig. 1 illustrates one particular type of construction for labyrinth 24, it will be appreciated that this is shown merely for purposes of example, and that other types of labyrinths, or other flow-reducer means, could be used.

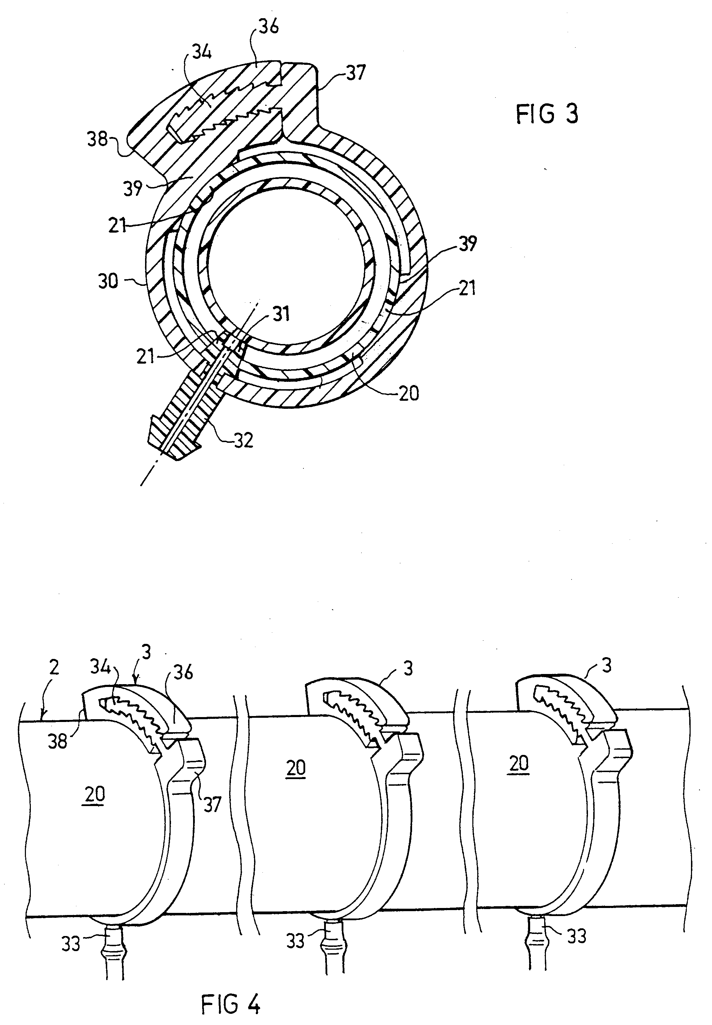

The tap 3, which converts the dripper tube 2 from a linear-soure dripper to a point-source dripper, includes a band 30 adapted to enclose and be clamped to the tube 20 at the location of one of its water discharge openings 21. Band 30 is integrally formed with a hollow stem 31 adapted to be forced through the respective water discharge opening 21 so as to abut against the surface of the annular outlet passageway 25 of the flow-reducer element 22 in alignment with the respective water discharge opening 21. The opposite end of hollow stem 31 is formed with a nipple 32 for receiving a water feed tubelet 33 (Figs. 2, 4) for directing the water to the plant to be irrigated.

One end of band 30 is formed as a tongue 34 receivable within a socket 35 formed in the opposite end 36 of the band. In this construction, both faces of the tongue 34 are formed with teeth 34a, and both faces of the socket 35 are formed with teeth 35a, oriented such as to permit the tongue to be received within the recess, but not to be removed therefrom, thereby firmly locking the tap 3 to the tube 20. The opposite ends of band 30 are formed with radially-extending walls 37, 38, to facilitate the manual insertion of tongue 34 within socket 35 when attaching the tap 3 to the tube 20.

In the construction illustrated in Figs. 1-4, tube 20 includes three water discharge openings 21 (Fig. 3), in an annular array, aligned with each of the annular outlet passageways 25 of the flow-reducer element 22. In this example, only one of the discharge openings 21 is to be used for tapping the water to a plant. Accordingly, band 30 includes only one hollow stem 31 and nipple 32 for one of the discharge openings 21. Band 30 includes two plugs 39 located to cover and plug the other two water discharge openings 21 when the tap 3 is applied to the tube 20.

Hollow stem 31 is of conical configuration with its tip of slightly smaller diameter than, and its opposite end slightly larger than, discharge opening 21. The tip 31a of the stem is adapted to firmly abut against the surface of the annular outlet passageway 25 of the flow-reducer element 22, and is formed with a slot 31b of rectangular configuration extending axially from its outer tip 31a to provide a water flowpath from the outlet passageway 25 through the stem 31 and nipple 32 to the feed tubelet 33.

The manner of using the tap 3 for converting the dripper tube 2 from a linear-source dripper to a point-source dripper will be apparent from the above description. Thus, one of the taps 3 is applied to tube 20 at each location along its length where one of the tube discharge openings 21 is to be used as a point-source supply of water to a plant (Fig. 4). For this purpose, band 30 of the tap 3 is applied around the tube 20, with the hollow stem 31 aligned with the respective discharge opening 21, and the band is then pressed inwardly to force the hollow stem 31 through the water discharge opening 21 until the tip 31a of the stem firmly abuts against the surface of the annular outlet passageway 25 of the flow-reducer element 22. The user then presses surfaces 37, 38 of the band 30 towards each other to firmly move tongue 34 into socket 35 at the opposite ends of the band, whereupon the band becomes firmly clamped to the tube 20.

When the band is so clamped, the hollow stem 31 is firmly sealed within the discharge opening 21. The rectangular slot 31b formed in the tip of the hollow stem conducts the water (after having entered the respective flow-reducer element 22 via the inlet opening 23 and having passed through the labyrinth 24 to the outlet passageway 25) through stem 31, nipple 32, and tublet 34, to the plant to receive the water. The other discharge openings 21 in alignment with the annular outlet passageway 25 of the flow-reducer element 22 are blocked by plug elements 39 integrally formed with band 30 of the tap 3.

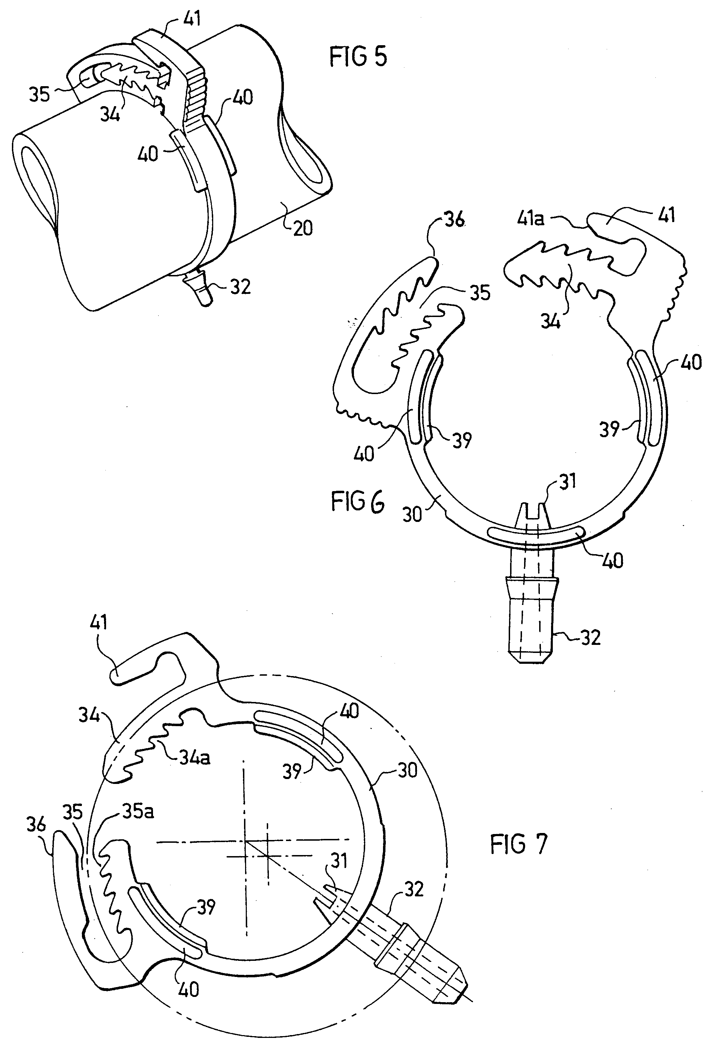

Figs. 5 and 6 illustrate a modified construction of the tap 3 of Figs. 1-4. One modification is the provision of side extensions 40 for each hollow stem 31 and plug 39. The side extensions 40 are of a width greater than the width of the annular outlet passageway 25, so that these extensions engage the annular walls 25a, 25b on the opposite sides of the passageway and thereby prevent the band from penetrating into and blocking this outlet passageway. Another modification is the provision of a camming tongue 41 spaced radially outwardly from the locking tongue 34. Camming tongue 41 includes an inner surface 41a which is engageable with the outer surface of end 36 of the band 30 for camming that end towards the locking tongue when received within the socket 35. The remaining construction of the tap illustrated in Figs. 5 and 6 is substantially the same as described above with respect to Figs. 1-4, and the corresponding parts have therefore been correspondingly been numbered.

Fig. 7 illustrates a slight modification in the construction of Figs. 5 and 6, in that the locking tongue 34 is formed with teeth 34a only on its lower surface, and socket 35 at the opposite end of the band 30 is formed with teeth 35a only on the surface thereof facing teeth 34a. The remaining construction is the same as described above, and therefore the corresponding parts have been correspondingly numbered.

## Claims

1. A drip irrigation emitter, comprising: a tube for receiving pressurized water and having a water discharge opening through a wall thereof; a flow-reducer element bonded to the inner face of the tube and having an inlet passageway at one end of the flow-reducer element communicating with the interior of the tube, and an outlet passageway at the opposite end of the flow-reducer element aligned with said discharge opening; and a tap attached to said tube and including a hollow stem at one end passing through said discharge opening in the tube in communication with said outlet passageway of the flow-reducer element, and a connector nipple at the opposite end.

2. The emitter according to Claim 1, wherein said tap is attached to said tube by a tube clamp including a band enclosing and clamped to the tube, said tap being integrally formed with said band.

3. The emitter according to Claim 2, wherein said hollow stem includes a tip abuttable against said flow-reducer element to limit the inner position of the hollow stem, said tip being formed with a slot extending axially of the hollow stem to provide a water flowpath from the outlet passageway of the flow-reducer element through said stem to said nipple.

4. The emitter according to either of Claims 2 or 3, wherein said outlet passageway in the flow-reducer element is of annular configuration and extends around the inner circumference of the tube, said tube including a plurality of discharge openings around its circumference in alignment with said outlet passageway, said band being integrally formed with one of said taps for at least one of said discharge openings, and with a plug for each of the remaining discharge openings.

5. The emitter according to Claim 4, wherein said band is integrally formed, at each tap and plug, with side extensions of a width greater than the width of said annular outlet passageway of the flow-reducer element, to engage the sides of said annular outlet passageway and thereby to prevent the band from penetrating into and blocking said annular outlet passageway.

6. The emitter according to any one of Claims 2-5, wherein one end of said band terminates in a socket, the opposite end of the band terminates in a locking tongue received in said socket, said socket and locking tongue being formed with inter-engaging teeth which lock the locking tongue within the socket when received therein.

7. The emitter according to any one of Claims 2-6, wherein said hollow stem is of conical configuration, having an outer diameter at its outer tip which is slightly smaller than the diameter of the respective discharge opening, and an outer diameter at its opposite end which is slightly larger than the diameter of the respective discharge opening.

8. A tap attachable to a drip irrigation tube which includes a water discharge opening through a wall thereof and a flow-reducer element bonded to the inner face of said wall and having an inlet passageway communicating with the interior of the tube and an outlet passageway aligned with said discharge opening; said tap comprising: a band for enclosing the tube and integrally formed with a hollow stem adapted to be forced through said discharge opening in the tube to be in communication with said outlet passageway of the flow-reducer element, and a connector nipple; said hollow stem including a tip abuttable against the flow-reducer element to limit the inner position thereof and being formed with a slot extending axially of the hollow stem to provide a water flowpath from the outlet passageway of the flow-reducer element through said stem and said nipple.

9. The tap according to Claim 8, attachable to a tube in which the outlet passageway in the flow-reducer element is of annular configuration and extends around the inner circumference of the tube, the tube including a plurality of discharge openings around its circumference in alignment with said annular outlet passageway; said band of the tap being integrally formed with one of said hollow stems and nipples for at least one of said discharge openings, and with a plug for each of the remaining discharge openings.

10. The tap according to Claim 9, wherein said hollow stem is of conical configuration, having an outer diameter at its outer tip which is slightly smaller than the diameter of the respective discharge opening, and an outer diameter at its opposite end which is slightly larger than the diameter of the respective discharge opening.
